# EUROPEAN PATENT SPECIFICATION

(11) **EP 3 562 653 B1**
(45) Date of publication and mention of the grant of the patent: **31.08.2022**
(21) Application number: 18734017.9
(22) Date of filing: 02.01.2018
(51) Int. Cl.: B29C 64/194, B22F 7/08, B33Y 30/00, B33Y 10/00, B29C 70/70, B29C 64/10, B29C 64/209, B22F 3/105, B33Y 40/00, B22F 10/20

(54) **METHOD AND SYSTEM FOR MANUFACTURING AN ARTICLE**
VERFAHREN UND SYSTEM ZUR HERSTELLUNG EINES ARTIKELS
PROCÉDÉ ET SYSTÈME DE FABRICATION D'UN ARTICLE

(30) Priority: 31.12.2016 US 201662441225 P; 30.12.2017 US 201715859433
(43) Date of publication of application: 06.11.2019
(73) Proprietor: ABB Schweiz AG, 5400 Baden (CH)
(72) Inventor: ROSSANO, Gregory, F., Enfield, CT 06082 (US); ZHANG, George Q., Windsor, CT 06095 (US); BOURNE, David, Alan, Acme, PA 15610 (US)
(74) Representative: Gunzelmann, Rainer
(86) International application number: PCT/US2018/012060
(87) International publication number: WO 2018/126263

(56) References cited:
- EP-A2- 3 013 565
- WO-A1-99/59801
- WO-A1-2015/112998
- US-A1- 2007 257 055
- US-A1- 2015 001 750
- US-A1- 2015 130 117
- US-A1- 2015 130 117
- US-A1- 2015 201 499
- US-A1- 2016 050 503
- US-B1- 6 305 769

## Description

### TECHNICAL FIELD

The present application relates generally to manufacturing and more particularly, but not exclusively, to systems and methods for manufacturing an article with an additive manufacturing process.

### BACKGROUND

Methods and systems for performing additive manufacturing processes remain an area of interest. Some existing methods and systems have various shortcomings, drawbacks and disadvantages relative to certain applications. For example, in some methods and systems, procedures performed on an article prior to completion of additive manufacturing may adversely affect the quality of the additively manufactured article. Accordingly, there remains a need for further contributions in this area of technology.

US 2015/130117 A1 discloses a system for 3D-printing of an object including multiple parts that are printed in stages. In the system, a 3D-printer is provided in combination with either a scanner, a measuring probe, or other repeatable jig or fixture, for enabling a user to remove a partially printed part of the object from the 3D-printer and subsequently returning the partially printed part to the exact position, so that 3D-printing can be resumed. For example, a print surface may be provided with a jig to locate both the print surface and a partially printed part during removal and re-insertion of the partially printed part into the 3D-printer.

EP 3 013 565 A2 discloses a method of printing a 3D object functional part including: extruding and depositing a structural filament in a predetermined pattern on a substrate/platform to form one or more portions of a 3D structure; placing or forming at least one functional electronic device on an exposed surface of the one or more portions; and extruding and depositing one or more conductive filaments to form interconnections with the at least one functional electronic device.

US 2015/001750 A1 discloses a method for building a three-dimensional object containing an identification-tag insert, the method comprising: forming a first set of layers of the three-dimensional object using a layer-based additive technique; placing the identification-tag insert on at least a first portion of the first set of layers; forming a second set of layers of the three-dimensional object on at least a second portion of the first set of layers and on at least a portion of the identification-tag insert using the layer-based additive technique such that the identification-tag insert is at least partially embedded between the first set of layers and the second set of layers; reading information from the identification-tag insert after forming the second set of layers; and performing at least one post-build operation on the three-dimensional object, based at least in part on the read information.

US 2016/050503 A1 discloses a method of manufacturing an element for a hearing aid having a body and a component, the method including: predetermining a relative position of the component on the element; predetermining a shape and a position of a holding device for the component in the predetermined relative position as an integral constituent part of the body; manufacturing a portion of the element by way of an additive manufacturing method, the portion of the element including a part of the body and a part of the holding device, the part of the holding device enabling the component to be positioned in the predetermined relative position in the part of the holding device; positioning the component in the part of the holding device; and finishing the body and/or the holding device using the additive manufacturing method.

WO 2015/112998 A1 concerns a three dimensional printer incorporating a kinematic coupling between a build platform and a movable stage which holds the build platform, of three curved protrusions attached to one of the build platform or the movable stage and six locating features formed in receivers of the other. At least two flexures differentially change a Z position of each of two of the curved protrusions. 3D printing is paused at a preset level of completion, and the build platform may be removed for external operations. A print resume circuit resumes printing of additional printed layers at the previous position in response to a return detection circuit that responds to an input.

### SUMMARY

The present invention concerns a method for manufacturing an article according to claim 1 and a system for performing additive manufacturing of an article on a build surface according to claim 14. Further aspects of the present invention are defined in the dependent claims.

One embodiment of the present invention is a unique method for manufacturing an article. Another embodiment is unique system for performing additive manufacturing of an article on a build surface. Other embodiments include apparatuses, systems, devices, hardware, methods, and combinations for additive manufacturing of various types. Further embodiments, forms, features, aspects, benefits, and advantages of the present application shall become apparent from the description and figures provided herewith.

### BRIEF DESCRIPTION OF THE FIGURES

The description herein makes reference to the accompanying drawings wherein like reference numerals refer to like parts throughout the several views, and wherein:
FIG. 1 schematically illustrates some aspects of a non-limiting example of a system for performing additive manufacturing in accordance with an embodiment of the present invention.
FIG. 2 schematically illustrates some aspects of a non-limiting example of a flowchart depicting a method for manufacturing an article in accordance with an embodiment of the present invention.
FIG. 3 schematically illustrates some aspects of a non-limiting example of a portion of an article manufactured by an additive manufacturing process into which a premade part is assembled in accordance with an embodiment of the present invention.
FIGS. 4A and 4B schematically illustrate some aspects of a non-limiting example not according to the claimed invention of a respective schematic plan view and side view of a portion of a system for performing additive manufacturing with a repositioning feature in the form of a kinetic ball mount.
FIGS. 5A and 5B schematically illustrate some aspects of a non-limiting example not according to the claimed invention of a respective schematic plan view and side view of a portion of a system for performing additive manufacturing with a repositioning feature in the form of a corner block.
FIGS. 6A and 6B schematically illustrate some aspects of a non-limiting example not according to the claimed invention of a respective schematic plan view and side view of a portion of a system for performing additive manufacturing with repositioning features in the form of pins and mating openings.
FIG. 7 schematically illustrates some aspects of a non-limiting example of a portion of an article manufactured by an additive manufacturing process into which a premade part is assembled, and in which a system for performing additive manufacturing 3-D prints around the premade part, in accordance with an embodiment of the present invention.
FIG. 8 schematically illustrates some aspects of a non-limiting example of a portion of an article manufactured by an additive manufacturing process into which a premade part is encapsulated within a 3-D printed article in accordance with an embodiment of the present invention.

### DETAILED DESCRIPTION OF THE ILLUSTRATIVE EMBODIMENTS

For the purposes of promoting an understanding of the principles of the invention, reference will now be made to the embodiments illustrated in the drawings and specific language will be used to describe the same. It will nevertheless be understood that no limitation of the scope of the invention is thereby intended. Any alterations and further modifications in the described embodiments, and any further applications of the principles of the invention as described herein are contemplated as would normally occur to one skilled in the art to which the invention relates.

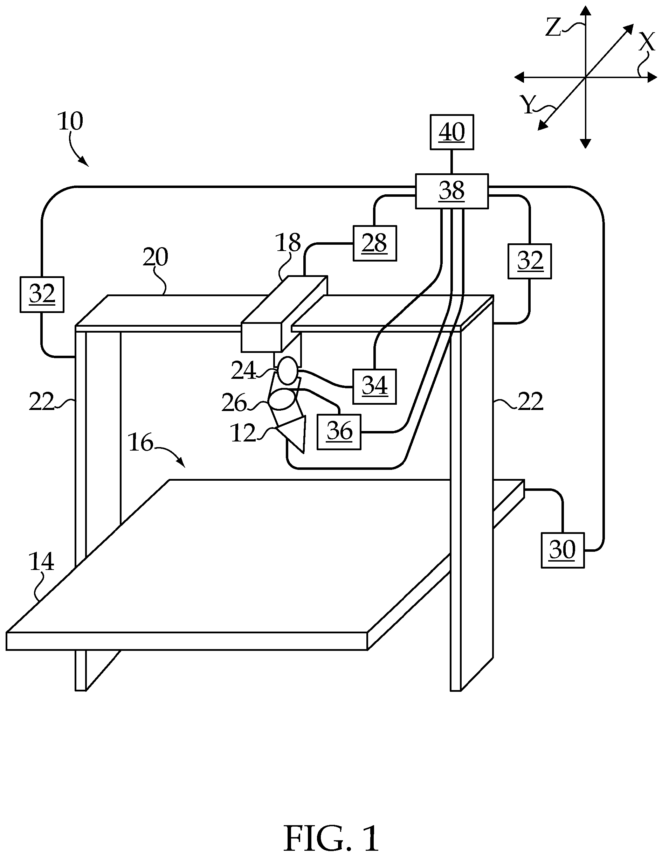

Referring to FIG. 1, some aspects of a non-limiting example of a system 10 for performing additive manufacturing in accordance with an embodiment of the present invention is schematically illustrated. System 10 includes printhead 12 and a bed 14. In one form, bed 14 forms a build surface 16 upon which an article is built in a layer-by-layer fashion by system 10 using an additive manufacturing process, e.g., 3-D printing. In other embodiments, build surface 16 may be spaced apart from bed 14, e.g., by a positioning feature as described in some embodiments herein. System 10 is operative to generate relative translational motion between printhead 12 and build surface 16 (bed 14 in the embodiment of FIG. 1) in three (3) mutually orthogonal axes, e.g., axes X, Y and Z. In one form, e.g., in the illustrated embodiment, system 10 is operative to generate the relative translational motion by translating printhead 12 bidirectionally along the X axis, and by translating bed 14 or another build surface 16 bidirectionally along each of the Y and Z axes. In other embodiments, other schemes maybe employed to achieve relative translational motion between printhead 12 and bed 14 or another build surface 16.

In one form, additive manufacturing or 3-D printing system 10 and printhead 12 is a material extrusion system, e.g., a fused deposition modeling system, e.g., in which a build material filament and in some embodiments also a support material filament, is melted and extruded onto build surface 16 and each successive layer, which cools and solidifies, fusing to the previous layer. For example, in the illustrated embodiment, printhead 12 is an extruder head. In other embodiments, system 10 and printhead 12 may be or include one or more other forms of additive manufacturing systems, for example and without limitation, a material jetting system; a binder jetting system; a sheet lamination system; a vat photo polymerization system; a powder bed fusion system such as selective laser sintering, selective laser melting or electron beam melting; and/or a direct energy deposition system, e.g., a laser engineered net shaping system. Thus, in the various embodiments, printhead 12 may be operative to discharge a material and/or energy to generate layers of fused material, each layer being fused to a previously printed and fused layer, wherein the fused layers ultimately form all or part of the manufactured article.

In the illustrated embodiment of FIG. 1, additive manufacturing system 10 further includes a printhead carrier 18, a carrier guide rail 20, a pair of vertical risers 22, a printhead rotational joint 24, a printhead rotational joint 26, an X-axis drive module 28, a Y-axis drive module 30, a Z-axis drive module 32 for each riser 22, a rotational drive module 34, a rotational drive module 36 and a controller 38. Printhead 12 is mounted on printhead carrier 18. Printhead carrier 18 is operative to support printhead 12 and ancillary equipment, e.g., build material supplies or supply train, and power and control lines, during translation printhead 12 along the X-axis. Carrier guide rail 20 defines the X-axis. Carrier guide rail 20 supports printhead carrier 18 and guides printhead carrier 18 along the X-axis. X-axis drive module 28 is coupled to printhead carrier 18 and/or carrier guide rail 20, and supplies translational motive power and mechanical position control along the X-axis to printhead carrier 18 and hence, printhead 12. Vertical risers 22 define the Z-axis. Vertical risers 22 support bed 14 and guide bed 14 along the Z-axis. Z-axis drive modules 32 are coupled to vertical risers 22 and/or to bed 14, and supply translational motive power and mechanical position control along the Z-axis to bed 14, and hence build surface 16. Vertical risers 22 and bed 14 jointly define the Y-axis, and guide bed 14 along the Y-axis. Y-axis drive module 30 is coupled to vertical risers 22 and/or to bed 14, and supplies translational motive power and mechanical position control to bed 14 along the Y-axis, and hence to build surface 16. Some embodiments may include two Y-axis drive modules for supplying translational motive power and mechanical position control to bed 14 along the Y-axis.

In one form, printhead rotational joint 24 is operative to rotate printhead 12 about an Rx axis parallel to the X-axis. In other embodiments, printhead rotational joint 24 may be operative to rotate printhead 12 about another axis. Rotational drive module 34 is operative to supply motive power and mechanical position control of printhead rotational joint 24. In one form, printhead rotational joint 26 is operative to rotate printhead 12 about an Ry axis parallel to the Y-axis. In other embodiments, printhead rotational joint 26 may be operative to rotate printhead 12 about another axis.

Rotational drive module 36 is operative to supply motive power and mechanical position control of printhead rotational joint 26.

Controller 38 is communicatively coupled to printhead 12, X-axis drive module 28, Y-axis drive module 30, each Z-axis drive module 32, rotational drive module 34, and rotational drive module 36. Controller 38 is operative to execute program instructions stored in a memory 40 (e.g., a computer RAM or ROM memory, mass storage device such as a hard drive or flash memory and/or other type of memory or storage device) communicatively coupled to and accessible to controller 38 to control the output of printhead 12, and to control the operation of X-axis drive module 28, Y-axis drive module 30, each Z-axis drive module 32, rotational drive module 34, and rotational drive module 36 to perform 3-D printing operations. For example, controller 38 is operative to translate printhead 12 to a desired delta-Z between printhead 12 and bed 14, another build surface 16 or a previously printed layer, and to trace a desired pattern in the X-Y plane to build an article layer by layer using an additive manufacturing process. In some embodiments, for example, wherein a separate part, e.g., a previously made or premade part or another part has been assembled to or built into or onto a partially completed 3-D printed article, controller 38 is operative to control rotational drive module 34 and rotational drive module 36, as well as X-axis drive module 28, Y-axis drive module 30, and each Z-axis drive module 32 to print around the part and complete the printing of the article, which in some embodiments may include partially or completely encapsulating the part with the balance of the article being printed.

A non-limiting example of an embodiment of system 10 in the form of a material extrusion system may be obtained by modifying a MakerGear M2 3-D printing system to include printhead rotational joint 24, printhead rotational joint 26, rotational drive module 34 and rotational drive module 36, and modifying its controller and/or operating software to control the rotation of its printhead using rotational joint 24, rotational joint 26, rotational drive module 34 and rotational drive module 36. MakerGear M2 is commercially available from MakerGear, LLC of Beachwood, OH, USA.

In some manufacturing scenarios, it is desirable to manufacture an article by initiating an additive manufacturing process, e.g., 3-D printing, and then performing one or more other procedures or operations on the article, for example and without limitation, assembling another part to the article, e.g., placing a premade part on or in the partially formed article at a desired location, and then completing the additive manufacturing process, e.g., to complete the manufacture of the article. Accordingly, embodiments of the present invention include initiating the additive manufacturing of the article on bed 14 associated with additive manufacturing system 10 using an additive manufacturing process; forming a portion of the article using the additive manufacturing process; pausing the additive manufacturing process prior to completion of the article; and performing one or more procedures on the portion of the article.

In some embodiments, the procedure(s) may not include an additive manufacturing process performed using additive manufacturing system 10, but may include an additive manufacturing process performed on another machine or system. In some embodiments, the procedure(s) may not include an additive manufacturing process at all. In some embodiments, the procedure(s) may be or include the assembly of a part, e.g., a premade part, to the portion of the article, e.g., the placement of the part onto or into the portion of the article at a desired location or into an opening or recess in the portion of the article, or may include adhering or affixing the premade part to the portion of the article. In some embodiments, the placement of the part may also include machining the portion of the article to accept locating features, e.g., pins or other locating features that may or may not be a part of the premade part, which are used to locate the part relative to the portion of the article. In other embodiments, other procedures may be performed, e.g., manufacturing or other operations or procedures. After performing the procedure, the additive manufacturing process of the article is resumed. The method then includes completing the additive manufacturing process of the article; and removing the article from the bed 14.

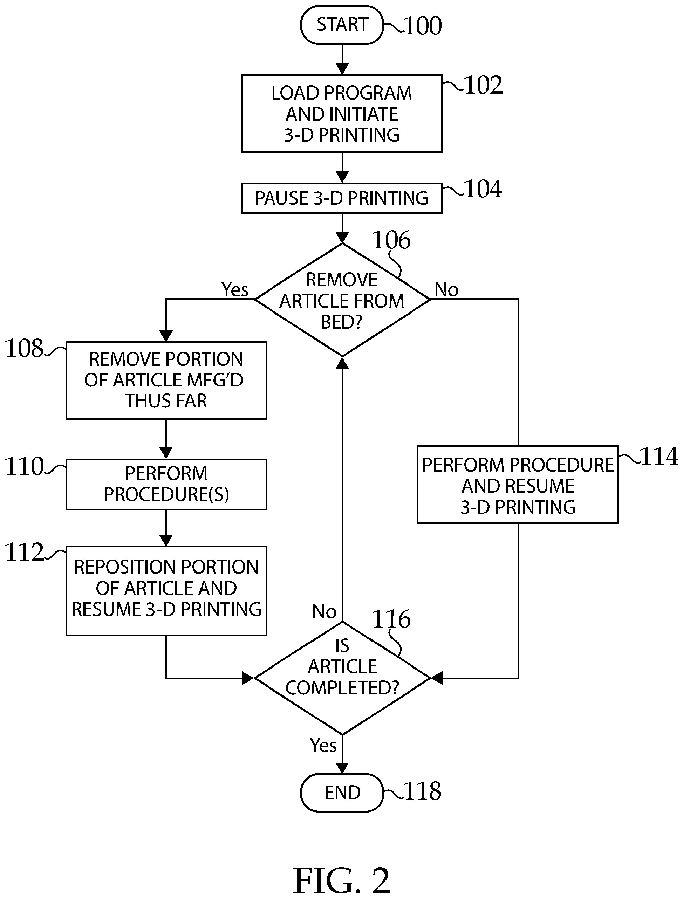

Referring to FIG. 2, some aspects of a non-limiting example of a flowchart depicting a method for manufacturing the article in accordance with an embodiment of the present invention is illustrated. At a block 100, process flow begins. At a block 102, a 3D printing program is loaded into memory 40; additive manufacturing or 3-D printing of an article 42 is initiated on build surface 16, e.g., bed 14 or another surface mounted on bed 14; and 3-D printing is performed to form a portion of article 42. For example, article 42 may be partially formed by 3-D printing to achieve a desired height and/or desired geometric features, following which it is desirable to perform a procedure on the portion of article 42 thus formed. In one non-limiting example, an opening or other feature may be formed onto or into which it is desired to assemble a part, e.g., a premade part, or on which it is desired to perform some other procedure.

At block 104, the additive manufacturing process is paused, e.g., so that the procedure may be performed on the portion of article 42 formed thus far. At block 106, a determination is made as to whether the portion of article 42 manufactured thus far should be removed from bed 16 to perform the procedure. If it is desired that the portion of article 42 be removed from bed 14 in order to perform the procedure, process flow proceeds to block 108, otherwise, process flow proceeds to block 114.

At block 108, the portion of article 42 manufactured thus far is removed from bed 14. In embodiments wherein bed 14 is the build surface 16, the portion of article 14 manufactured thus far is removed from the build surface 16. In some embodiments, the portion of article 42 is printed onto a build surface 16 that is itself mounted onto bed 14, in which case at block 108, the build surface 16 is removed from bed 14. In various embodiments, the portion of the article 42 may be removed robotically or manually.

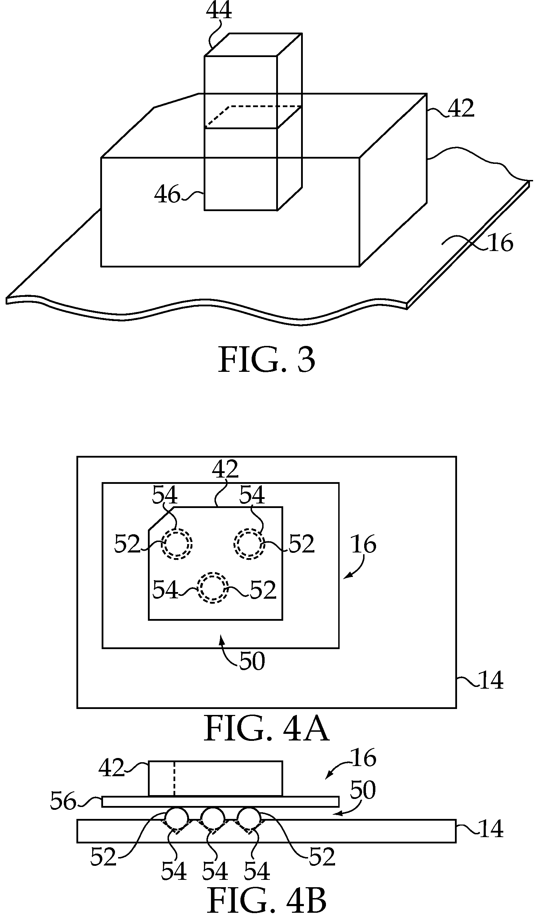

At block 110, one or more procedures are performed, which in some embodiments may include placing the portion of article 42 into another machine or system in order to perform the procedure. As set forth above, procedures may be, for example, the assembly of one or more parts to the portion of article 42, e.g., premade parts, 3-D printing of a part on article 42 using system 10 or another additive manufacturing system, one or more machining or other manufacturing processes, or any manufacturing, inspection and/or any other procedure. In the illustration of FIG. 3, the procedure is the assembly of a premade part 44 to the portion of article 42 manufactured thus far. For example, in some embodiments, the portion of article 42 manufactured thus far includes a square opening 46 into which a rectangular premade part 44 is inserted. In various embodiments, part 44 may be assembled to the portion of article 42 robotically or manually.

At block 112, the portion of article 42 manufactured thus far is replaced or repositioned onto bed 14 after the procedure is performed, and the additive manufacturing or 3-D printing of article 42 is resumed. In one form, the repositioning includes replacing the portion of article 42 manufactured thus far onto bed 14 and repositioning the portion of article 42 at the original location on bed 14 in which the portion of article 42 was disposed prior to being removed at block 108. For example, the portion of article 14 is repositioned to the same Z, Y and Z coordinates in which it was disposed prior to removal at block 108. By accurately repositioning the portion of article 42 after performing one or more procedures, and in some embodiments geometrically constraining all or most degrees of freedom of the repositioned portion of article 42 after performing one or more procedures, the additive manufacturing process may be continued without adversely impacting the quality of the additively manufactured article 42, without substantially adversely impacting the quality of the additively manufactured article 42, or with minimal adverse impact, depending upon the embodiment. For example, without accurate repositioning, small gaps or flaws in the 3-D printed structure of article 42 may be formed after 3-D printing is resumed. The repositioning may be performed robotically or by human hand, alone or with the use of tools.

In some embodiments according and not according to the claimed invention, the repositioning includes the use of a part positioning feature. For example, referring to FIGS. 4A and 4B, some aspects of a non-limiting example not according to the claimed invention of a respective schematic plan view and side view of a portion of system 10 are illustrated. FIGS. 4A and 4B illustrate the portion of article 42 with part 44 and opening 46 not shown for the sake of clarity. In the example not according to the claimed invention of FIGS. 4A and 4B, a repositioning feature 50 in the form of a kinetic ball mount is employed. Repositioning feature 50 includes three kinetic balls 52 disposed in conical openings 54. Conical openings 54 are disposed in bed 14 in a triangular pattern. In one form, the kinetic balls are ½ inch spheres. In other embodiments according and not according to the claimed invention, other sizes of kinetic balls may be employed. In other embodiments according and not according to the claimed invention other number of kinetic balls may be used, other shapes for openings 54 may be used, and other geometric spacing patterns of kinetic balls 52 and conical openings 54 may be employed. Kinetic balls 52 are affixed to a plate 56 which functions as build surface 16 in the embodiment not according to the claimed invention of FIGS. 4A and 4B, onto which article 42 is additively manufactured. For example, kinetic balls 52 may be adhered to plate 56 with an adhesive. In other embodiments according and not according to the claimed invention, other forms of kinetic ball mounts may be employed.

In embodiments not according to the claimed invention, employing kinetic ball mounts, portion of article 42 is removed from and subsequently repositioned on bed 14 simply by lifting plate 56 off of bed 14 to remove portion of article 42, and then matching kinetic balls 52 with corresponding conical openings 54 and replacing plate 56 onto bed 54, engaging kinetic balls 52 with corresponding conical openings 54, to reposition the portion of article 42 on bed 14. In embodiments according to the claimed invention, as an alternative to using plate 56, the printing of article 42 may be performed directly onto bed 14, and may include rotation of printhead 12 about one or both of rotational joints 24 and 26 during the printing process to thereby partially encapsulate kinetic balls 52. In such embodiments, portion of article 42 is removed from and repositioned on bed 14 simply by lifting and removing it from bed 14, and by subsequently matching kinetic balls 52 with corresponding conical openings 54 and replacing the portion of article 42 back onto bed 14 while engaging kinetic balls 52 with conical openings 54, respectively. Kinetic balls 52 may be machined to high precision and accuracy in order to improve the accuracy of replacement or repositioning, e.g., +/-0.000001 inch in some embodiments.

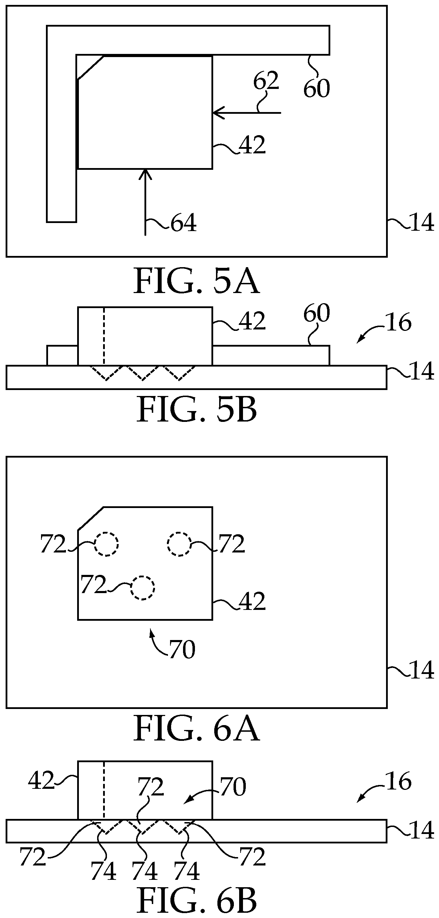

Referring to FIGS. 5A and 5B some aspects of a non-limiting example not according to the claimed invention of a respective schematic plan view and side view of a portion of system 10 with a repositioning feature in the form of a block, e.g., a corner block, are schematically illustrated. FIGS. 5A and 5B illustrate the portion of article 42 with part 44 and opening 46 not shown for the sake of clarity. In the embodiment not according to the claimed invention of FIGS. 5A and 5B, a corner block may be used to reposition the portion of article 42 manufactured thus far. For example, prior to removal of the portion of article 42 from bed 14, a repositioning feature 60 in the form of a corner block may be placed against, e.g., pushed into pushed into position against, two edges or other portions of article 42 and clamped or otherwise fixed in place. In other embodiments not according to the claimed invention, one or more of other forms of blocks may be used. The portion of article 42 may then be removed, and the procedure performed.

The portion of article 42 may then be placed back onto bed 42 in close proximity to repositioning feature 60. Pushing forces 62 and 64 may then be applied to the portion of article 42 in the direction of repositioning feature 60 to direct it against repositioning feature 60. Gravity, clamping features (e.g., features formed as a part of or as temporarily a part of article 42 that may be clamped to bed 14 to secure the portion of article 42) or adhesive force may then be employed to retain the portion of article 42 as repositioned back in the original printing location. In some embodiments not according to the claimed invention, an adhesive may be employed to secure the portion of article 42 to bed 14. Although a 90 degree corner block is illustrated in FIGS. 5A and 5B, it will be understood that any suitable shape that aligns with desired surfaces, lines or points on the portion of the article 42 may be employed.

Referring to FIGS. 6A and 6B, some aspects of a non-limiting example of a respective schematic plan view and side view of a portion of system 10 with repositioning features 70 in the form of pins are schematically illustrated. FIGS. 6A and 6B illustrate the portion of article 42 with part 44 and opening 46 not shown for the sake of clarity. In the embodiment of FIGS. 6A and 6B, pins 72, i.e., protuberances extending from the portion of article 42 manufactured thus far, may be used to reposition the portion of article 42 manufactured thus far. For example, pins 72 may be engaged with openings 74 disposed in bed 14. In the example of FIGS. 6A and 6B, three (3) pins 72 having a conical shape are disposed in corresponding conically shaped openings 74. The pins 72 and openings 74 are disposed in a triangular pattern. In other embodiments, pins 72 and openings 74 may have other geometric shapes, and any number of pins 72 and corresponding openings 74 arranged in any suitable geometric spacing configuration may be employed. In one form, pins 72 are additively manufactured into openings 74, e.g., 3-D printed by printhead 12. In embodiments according to the claimed invention, separate standalone pins may be employed, e.g., inserted into openings 74, wherein printhead 12 prints around the pins, e.g., to adhere the subsequently printed article 42 to the pins or to or to partially encapsulate the pins within article 42. In embodiments according to the claimed invention employing pins 72 with openings 74, the portion of article 42 is removed from and repositioned on bed 14 simply by lifting it off of bed 14, and subsequently replacing it onto bed 54 while engaging pins 72 with openings 74, respectively. In embodiments not according to the claimed invention, pins 72 may be adhered to or otherwise affixed to or formed as part of a separate plate, e.g., such as plate 56, which may function as a build surface 16 onto which article 42 is built.

After the portion of article 42 is repositioned at the original location on bed 14, the 3-D printing of article 42 is continued until either article 42 is completed or until a point is reached at which it is desired to perform another procedure, such as described above with respect to block 110, in which case printing is paused upon reaching that point.

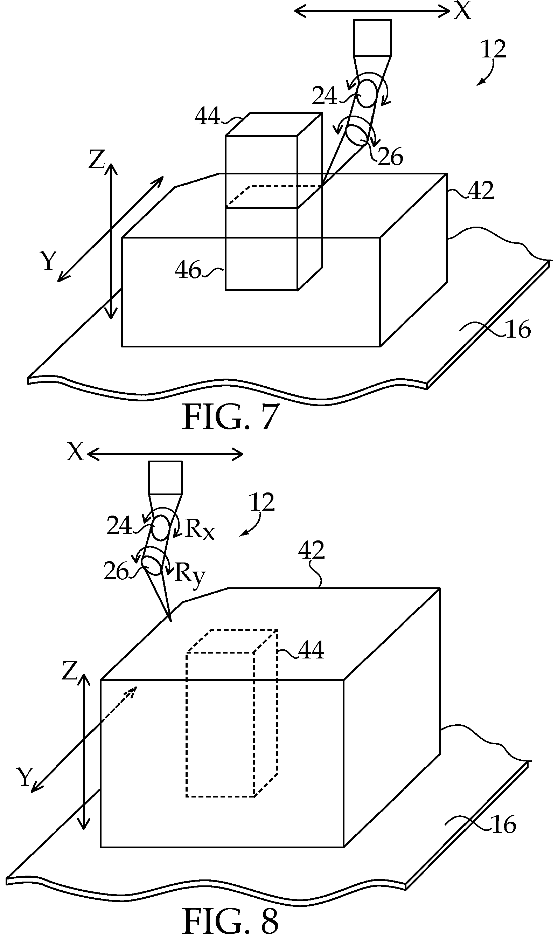

Referring to FIG. 7, in some embodiments, the additive manufacturing or 3-D printing includes manipulating or varying the orientation of printhead 12 by rotating it about rotational joint 24 and/or rotational joint 26 in order to perform 3-D printing that includes printing around all or a portion of part 44. For example, the rotation of printhead 12 allows printing at the intersection of part 44 and the previously printed topmost layer of the portion of article 42 manufactured thus far, and printing in close proximity to part 44 that may not be otherwise achievable absent the rotation. In some embodiments, the rotation may take place during translation the X, Y and/or Z directions, including during printing, whereas in other embodiments, the rotation may take place before printing or between printing passes.

By rotating printhead 12 about rotational joint 24 and/or rotational joint 26, printhead 12 may be oriented so as to be able 3-D print around the periphery of part 44 that may not be otherwise achievable absent the rotation about rotational joint 24 and/or rotational joint 26. In some embodiments, the continued 3-D printing at block 112 includes partially or completely encapsulating the assembled part 44. For example, in the depiction of FIG. 8, part 44 has been completely encapsulated by article 42 by 3-D printing article 42 around and over part 44. In some embodiments, the rotation of printhead 12 about rotational joints 24 and/or 26 allows 3-D printing in planes out of the initial printing plane, e.g., the X-Y plane. For example, selective translation in the X, Y and Z axes with printhead 12 rotated to a desired angle may allow printing in any or almost any plane at any or almost any angle relative to the initial printing plane or the basic printing plane, e.g., the X-Y plane.

After the 3-D printing of article 42 is completed or the point is reached at which it is desired to perform another procedure, process flow proceeds to block 16.

Alternatively to blocks 108, 110 and 112, if the determination at block 106 was that the portion of article 42 did not need to be removed from system 10 in order to perform the procedure, process flow proceeds to block 114. At block 114, the procedure is performed, e.g., as described above, but without removing the portion of article 42 from system 10; and 3-D printing of article 42 is resumed, e.g., as described above, until the 3-D printing of article 42 is completed or the point is reached at which it is desired to perform another procedure, e.g., as described above. Process flow then proceeds to block 116.

At block 116, a determination is made as to whether article 42 is completed or whether any additional procedures are to be performed. For example, whereas in some embodiments the 3-D printing may be completed in its entirety at this stage, in other embodiments, one or more additional procedures (e.g., as described above with respect to blocks 110 and/or 114) and subsequent stages of 3-D printing may be performed. If article 42 is completed, process flow proceeds to block 118. At block 118, process flow ends. If one or more additional procedures are to be performed, process flow proceeds back to block 106. In the non-limiting example of FIG. 8, the completed article 42 includes the encapsulated premade part 44.

While the invention has been illustrated and described in detail in the drawings and foregoing description, the same is to be considered as illustrative and not restrictive in character, it being understood that only the preferred embodiments have been shown and described. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

## Claims

1. A method for manufacturing an article (42), comprising:
initiating an additive manufacturing process (100) of the article (42) on a bed (14) associated with an additive manufacturing system (10) using an additive manufacturing process (100), wherein the article (42) is positioned relative to the bed (14) with a plurality of positioning features (50, 70) that are received in corresponding ones of a plurality of openings (54, 74) in the bed (14);
forming a portion of the article (42) using the additive manufacturing process (100);
pausing (104) the additive manufacturing process (100) prior to completion of the article (42);
performing (110, 114) a procedure on the portion of the article (42), wherein the procedure is not an additive manufacturing process (100) performed using the additive manufacturing system (10);
after performing the procedure, resuming the additive manufacturing process (100) of the article (42);
completing the additive manufacturing process (100) of the article (42); and
removing the article (42) from the bed (14),
**characterized in that**
the article (42) is formed around kinetic balls (52) of the plurality of positioning features such that the article (42) partially encapsulates the kinetic balls (52), or
the article (42) is formed around pins (72) of the plurality of positioning features such that the article (42) adheres to the pins (72) or partly encapsulates the pins (72).

2. The method of claim 1, wherein the performing (110, 114) of the procedure on the portion of the article (42) includes assembling a premade part (44) to the portion of the article (42).

3. The method of claim 2, wherein the resuming (112, 114) of the additive manufacturing process (100) of the article (42) includes 3-D printing the article (42) at least partially around the premade part (44).

4. The method of claim 3, wherein the 3-D printing includes rotating a printhead (12) of the additive manufacturing system (10) about at least two axes; or
further comprising 3-D printing the article (42) to partially encapsulate the premade part part (44); or
further comprising 3-D printing the article (42) to completely encapsulate the premade part (44).

5. The method of claim 1, further comprising removing (108) the portion of the article (42) from the bed (14) after pausing (104) the additive manufacturing process (100) and before performing (110) the procedure; and replacing (112) the portion of the article (42) onto the bed (14) after performing the procedure (110).

6. The method of claim 5, wherein the portion of the article (42) is positioned at an original location on the bed (14) prior to removing (108) the portion of the article (42), wherein the replacing (112) of the portion of the article (42) onto the bed (14) includes repositioning the portion of the article (42) at the original location.

7. The method of claim 1, wherein the additive manufacturing system (10) includes a printhead (12) operative to rotate about at least two axes; and wherein the additive manufacturing process (100) includes rotating the printhead (12) about the at least two axes.

8. The method of claim 1, wherein performing the procedure includes:
removing (108) the portion of the article (42) from a location on the bed (14);
assembling a premade part (44) to the portion of the article (42); and
repositioning (112) the portion of the article (42) to the location on the bed (14).

9. The method of claim 8, wherein the resuming (112) the additive manufacturing process (100) includes 3-D printing the article (42) at least partially around the premade part (44).

10. The method of claim 9, further comprising rotating a printhead (12) of the additive manufacturing system (10) about at least one axis before or during the 3-D printing.

11. The method of claim 5, wherein the plurality of openings (54) are each conically shaped, and replacing (112) the portion of the article (42) onto the bed (14) after performing (110) the procedure includes inserting the plurality of kinetic balls (52) into the corresponding ones of the conically shaped openings (54).

12. The method of claim 5, wherein the plurality of openings (74) are each conically shaped, and replacing (112) the portion of the article (42) onto the bed (14) after performing (110) the procedure includes inserting the plurality of pins (72) into the corresponding ones of the conically shaped openings (74).

13. A system (10) for performing additive manufacturing of an article (42) on a build surface (16), comprising:
a bed (14) forming the build surface (16);
a plurality of positioning features (50, 70) for positioning the article (42) relative to the bed (14), the positioning features (50, 70) are received in corresponding ones of a plurality of openings (54, 74) in the bed (14);
a printhead (12) operative to discharge material and/or energy to generate successive fused layers on the build surface (16);
a first drive module (28) operative to generate relative translational motion between the printhead (12) and the build surface (16) along a first axis;
a second drive module (30) operative to generate relative translational motion between the printhead (12) and the build surface (16) along a second axis orthogonal to the first axis;
a third drive module (32) operative to generate relative translational motion between the printhead (12) and the build surface (16) along a third axis orthogonal to the first axis and to the second axis; and
a rotational joint (24) operative to rotate the printhead (12) about a fourth axis,
**characterized in that** the system is configured to
form the article (42) around kinetic balls (52) of the plurality of positioning features such that the article (42) partially encapsulates the kinetic balls (52), or
form the article (42) around pins (72) of the plurality of positioning features such that the article (42) adheres to the pins (72) or partly encapsulates the pins (72).

14. The system (10) of claim 13, further comprising another rotational joint (26) operative to rotate the printhead (12) about a fifth axis.

## Patentansprüche

1. Verfahren zur Herstellung eines Gegenstandes (42), umfassend:
Einleiten eines additiven Herstellungsprozesses (100) des Gegenstandes (42) auf einem Bett (14), das mit einem additiven Herstellungssystem (10) verbunden ist, unter Verwendung eines additiven Herstellungsprozesses (100), wobei der Gegenstand (42) relativ zu dem Bett (14) mit einer Vielzahl von Positionierungsmerkmalen (50, 70) positioniert wird, die in entsprechenden einer Vielzahl von Öffnungen (54, 74) in dem Bett (14) aufgenommen sind;
Formen eines Teils des Gegenstands (42) unter Verwendung des additiven Herstellungsprozesses (100);
Unterbrechen (104) des additiven Herstellungsprozesses (100) vor der Fertigstellung des Gegenstandes (42);
Durchführen (110, 114) einer Prozedur an dem Teil des Gegenstandes (42), wobei die Prozedur kein additiver Herstellungsprozess (100) ist, der unter Verwendung des additiven Herstellungssystems (10) durchgeführt wird;
nach der Durchführung des Prozedur Wiederaufnehmen des additiven Herstellungsprozesses (100) des Gegenstandes (42);
Fertigstellung des additiven Herstellungsprozesses (100) des Gegenstandes (42); und
Entnehmen des Gegenstandes (42) aus dem Bett (14),
**dadurch gekennzeichnet, dass**
der Gegenstand (42) um kinetische Kugeln (52) der Vielzahl von Positionierungsmerkmalen herum geformt ist, so dass der Gegenstand (42) die kinetischen Kugeln (52) teilweise einkapselt, oder
der Gegenstand (42) um Stifte (72) der Vielzahl von Positionierungsmerkmalen so geformt ist, dass der Gegenstand (42) an den Stiften (72) haftet oder die Stifte (72) teilweise einkapselt.

2. Verfahren nach Anspruch 1, wobei die Durchführung (110, 114) der Prozedur an dem Teil des Gegenstandes (42) Zusammenfügen eines vorgefertigten Teils (44) mit dem Teil des Gegenstandes (42) umfasst.

3. Verfahren nach Anspruch 2, wobei das Wiederaufnehmen (112, 114) des additiven Herstellungsprozesses (100) des Gegenstandes (42) 3D-Drucken des Gegenstandes (42) zumindest teilweise um das vorgefertigte Teil (44) herum umfasst.

4. Verfahren nach Anspruch 3, wobei das 3D-Drucken Drehen eines Druckkopfes (12) des additiven Herstellungssystems (10) um mindestens zwei Achsen umfasst; oder
ferner 3D-Drucken des Gegenstandes (42), um das vorgefertigte Teil (44) teilweise einzukapseln, umfasst; oder
ferner 3D-Drucken des Gegenstandes (42), um das vorgefertigte Teil (44) vollständig zu umschließen, umfasst.

5. Verfahren nach Anspruch 1, ferner umfassend Entfernen (108) des Teils des Gegenstands (42) vom Bett (14) nach dem Unterbrechen (104) des additiven Herstellungsprozesses (100) und vor der Durchführung (110) der Prozedur; und Wiederaufnehmen (112) des Teils des Gegenstands (42) auf das Bett (14) nach der Durchführung der Prozedur (110).

6. Verfahren nach Anspruch 5, wobei der Teil des Gegenstandes (42) vor dem Entfernen (108) des Teils des Gegenstandes (42) an einer ursprünglichen Stelle auf dem Bett (14) positioniert wird, wobei das Wiederaufnehmen (112) des Teils des Gegenstandes (42) auf das Bett (14) erneutes Positionieren des Teils des Gegenstandes (42) an der ursprünglichen Stelle umfasst.

7. Verfahren nach Anspruch 1, wobei das additive Herstellungssystem (10) einen Druckkopf (12) aufweist, der sich um mindestens zwei Achsen drehen kann, und wobei der additive Herstellungsprozess (100) Drehen des Druckkopfs (12) um die mindestens zwei Achsen umfasst.

8. Verfahren nach Anspruch 1, wobei die Durchführung der Prozedur umfasst:
Entfernen (108) des Teils des Gegenstandes (42) von einer Stelle auf dem Bett (14);
Zusammenbauen eines vorgefertigten Teils (44) mit dem Teil des Gegenstandes (42); und
erneutes Platzieren (112) des Teils des Gegenstandes (42) an der Stelle auf dem Bett (14).

9. Verfahren nach Anspruch 8, wobei die Wiederaufnahme (112) des additiven Herstellungsprozesses (100) 3D-Drucken des Gegenstandes (42) zumindest teilweise um das vorgefertigte Teil (44) herum umfasst.

10. Verfahren nach Anspruch 9, ferner umfassend Drehen eines Druckkopfes (12) des additiven Herstellungssystems (10) um mindestens eine Achse vor oder während des 3D-Drucks.

11. Verfahren nach Anspruch 5, wobei die Vielzahl von Öffnungen (54) jeweils konisch geformt sind und Wiederaufnehmen (112) des Teils des Gegenstands (42) auf das Bett (14) nach Durchführung (110) der Prozedur Einführen der Vielzahl von kinetischen Kugeln (52) in die entsprechenden der konisch geformten Öffnungen (54) umfasst.

12. Verfahren nach Anspruch 5, wobei die Vielzahl von Öffnungen (74) jeweils konisch geformt sind und Wiederaufnehmen (112) des Teils des Gegenstands (42) auf das Bett (14) nach Durchführung (110) der Prozedur Einsetzen der Vielzahl von Stiften (72) in die entsprechenden der konisch geformten Öffnungen (74) umfasst.

13. System (10) zur Durchführung der additiven Herstellung eines Gegenstands (42) auf einer Aufbaufläche (16), umfassend:
ein Bett (14), das die Aufbaufläche (16) bildet;
eine Vielzahl von Positionierungsmerkmalen (50, 70) zum Positionieren des Gegenstandes (42) relativ zum Bett (14), wobei die Positionierungsmerkmale (50, 70) in entsprechenden einer Vielzahl von Öffnungen (54, 74) im Bett (14) aufgenommen sind;
einen Druckkopf (12), der Material und/oder Energie abgibt, um aufeinanderfolgende geschmolzene Schichten auf der Aufbaufläche (16) zu erzeugen;
ein erstes Antriebsmodul (28), das eine relative Translationsbewegung zwischen dem Druckkopf (12) und der Aufbaufläche (16) entlang einer ersten Achse erzeugt;
ein zweites Antriebsmodul (30) zum Erzeugen einer relativen Translationsbewegung zwischen dem Druckkopf (12) und der Aufbaufläche (16) entlang einer zweiten Achse orthogonal zur ersten Achse;
ein drittes Antriebsmodul (32) zum Erzeugen einer relativen Translationsbewegung zwischen dem Druckkopf (12) und der Aufbaufläche (16) entlang einer dritten Achse orthogonal zu der ersten Achse und der zweiten Achse; und
ein Drehgelenk (24), das dazu dient, den Druckkopf (12) um eine vierte Achse zu drehen,
**dadurch gekennzeichnet, dass** das System so konfiguriert ist, dass es
den Gegenstand (42) um kinetische Kugeln (52) der Vielzahl von Positionierungsmerkmalen so formt, dass der Gegenstand (42) die kinetischen Kugeln (52) teilweise einkapselt, oder
den Gegenstand (42) um Stifte (72) der Vielzahl von Positionierungsmerkmalen herum so formt, dass der Gegenstand (42) an den Stiften (72) haftet oder die Stifte (72) teilweise einkapselt.

14. System (10) nach Anspruch 13, ferner umfassend ein weiteres Drehgelenk (26), das den Druckkopf (12) um eine fünfte Achse dreht.

## Revendications

1. Procédé de fabrication d'un article (42), consistant à :
lancer un processus de fabrication additive (100) de l'article (42) sur un lit (14) associé à un système de fabrication additive (10) à l'aide d'un processus de fabrication additive (100), dans lequel l'article (42) est positionné par rapport au lit (14) au moyen d'une pluralité d'éléments de positionnement (50, 70) qui sont reçus dans des ouvertures correspondantes d'une pluralité d'ouvertures (54, 74) dans le lit (14) ;
former une partie de l'article (42) à l'aide du processus de fabrication additive (100) ;
mettre en pause (104) le processus de fabrication additive (100) avant que l'article ne soit terminé (42) ;
effectuer (110, 114) une procédure sur la partie de l'article (42), la procédure n'étant pas un procédé de fabrication additive (100) effectué à l'aide du système de fabrication (10) ;
une fois la procédure terminée, reprendre le processus de fabrication additive (100) de l'article (42) ;
terminer le procédé de fabrication additive (100) de l'article (42) ; et
retirer l'article (42) du lit (14),
**caractérisé en ce que**
l'article (42) est formé autour de balles cinétiques (52) de la pluralité d'éléments de positionnement de sorte que l'article (42) encapsule à certains endroits les balles cinétiques (52), ou
l'article (42) est formé autour de tiges (72) de la pluralité d'éléments de positionnement de sorte que l'article (42) adhère aux tiges (72) ou encapsule à certains endroits les tiges (72).

2. Procédé selon la revendication 1, dans lequel l'exécution (110, 114) de la procédure sur la partie de l'article (42) consiste à assembler une partie préfabriquée (44) à la partie de l'article (42).

3. Procédé selon la revendication 2, dans lequel la reprise (112, 114) du processus de fabrication additive (100) de l'article (42) consiste à imprimer en 3D l'article (42) au moins partiellement autour de la partie préfabriquée (44).

4. Procédé selon la revendication 3, dans lequel l'impression en 3D consiste à faire tourner une tête d'impression (12) du système de fabrication additive (10) autour d'au moins deux axes, ou
consistant en outre à imprimer en 3D l'article (42) pour au moins encapsuler à certains endroits la partie préfabriquée (44) ; ou
consistant en outre à imprimer en 3D l'article (42) pour au moins encapsuler entièrement la partie préfabriquée (44).

5. Procédé selon la revendication 1, consistant en outre à retirer (108) la partie de l'article (42) du lit (14) après la mise en pause (104) du processus de fabrication additive (100) et avant l'exécution (110) de la procédure, et à remplacer (112) la partie de l'article (42) sur le lit (14) une fois la procédure (110) terminée.

6. Procédé selon la revendication 5, dans lequel la partie de l'article (42) est positionnée dans un emplacement d'origine sur le lit (14) avant de retirer (108) la partie de l'article (42), dans lequel le remplacement (112) de la partie de l'article (42) sur le lit (14) consiste à repositionner la partie de l'article (42) dans l'emplacement d'origine.

7. Procédé selon la revendication 1, dans lequel le système de fabrication additive (10) comprend une tête d'impression (12) destinée à tourner autour d'au moins deux axes ; et dans lequel le processus de fabrication additive (100) consiste à faire tourner la tête d'impression (12) autour desdits deux axes.

8. Procédé selon la revendication 1, dans lequel l'exécution de la procédure consiste à :
retirer (108) la partie de l'article (42) d'un emplacement sur le lit (14) ;
assembler une partie préfabriquée (44) à la partie de l'article (42), et
repositionner (112) la partie de l'article (42) à l'emplacement sur le lit (14).

9. Procédé selon la revendication 8, dans lequel la reprise (114) du processus de fabrication additive (100) consiste à imprimer en 3D l'article (42) au moins partiellement autour de la partie préfabriquée (44).

10. Procédé selon la revendication 9, consistant en outre à faire tourner une tête d'impression (12) du système de fabrication additive (10) autour d'au moins deux axes avant ou pendant l'impression 3D.

11. Procédé selon la revendication 5, dans lequel la pluralité d'ouvertures (54) sont chacune conique, et le replacement (112) de la partie de l'article (42) sur le lit (14) après l'exécution (110) de la procédure consiste à insérer la pluralité de balles cinétiques (52) dans les ouvertures correspondances parmi les ouvertures coniques (54).

12. Procédé selon la revendication 5, dans lequel la pluralité des ouvertures (74) est chacune conique, et le replacement (112) de la partie de l'article (42) sur le lit (14) après l'exécution (110) de la procédure consiste à insérer la pluralité de tiges (72) dans les ouvertures correspondantes parmi les ouvertures coniques (74).

13. Système (10) de fabrication additive d'un article (42) sur une surface de construction (16), comprenant :
un lit (14) formant la surface de construction (16) ;
une pluralité d'éléments de positionnement (50, 70) pour positionner l'article (42) par rapport au lit (14), les éléments de positionnement (50, 70) sont logés dans des ouvertures correspondantes d'une pluralité d'ouvertures (54, 74) dans le lit (14) ;
une tête d'impression (12) destinée à décharger le matériau et/ou l'énergie pour générer des couches fusionnées successivement sur la surface de construction (16) ;
un premier module de commande (28) destiné à générer un mouvement de translation relatif entre la tête d'impression (12) et la surface de construction (16) le long d'un premier axe ;
un deuxième module de commande (30) destiné à générer un mouvement de translation relatif entre la tête d'impression (12) et la surface de construction (16) le long d'un second axe orthogonal au premier axe ;
un troisième module de commande (32) destiné à générer un mouvement de translation relatif entre la tête d'impression (12) et la surface de construction (16) le long d'un troisième axe orthogonal au premier axe et au deuxième axe ; et
une articulation rotoïde (24) destinée à faire tourner la tête d'impression (12) autour d'un quatrième axe,
**caractérisé en ce que** le système est conçu pour
former l'article (42) autour de balles cinétiques (52) de la pluralité d'éléments de positionnement de sorte que l'article (42) encapsule les balles cinétiques (52), ou
former l'article (42) autour de tiges (72) de la pluralité d'éléments de positionnement de sorte que l'article (42) adhère aux tiges (72) ou encapsule en partie les tiges (72).

14. Système (10) selon la revendication 13, comprenant en outre une autre articulation rotoïde (26) destinée à faire tourner la tête d'impression (12) autour d'un cinquième axe.
